# EUROPEAN PATENT APPLICATION

(11) **EP 1 859 673 A1**
(43) Date of publication of application: **28.11.2007**
(21) Application number: 06714743.9
(22) Date of filing: 27.02.2006
(51) Int. Cl.: A01G 7/00, A01G 9/02, A01G 9/24, F21V 8/00

(54) **LIGHTING DEVICE AND PLANT GROWING DEVICE EQUIPPED WITH THE LIGHTING DEVICE**

(30) Priority: 14.03.2005 JP 2005071115
(71) Applicant: Tokuju Kogyo Co., Ltd, Takamatsu-shi Kagawa 760006 (JP)
(72) Inventor: TANAKA, Michio, Kagawa, 7610702 (JP); SAKATANI, Eishiro, kamatsu-shi, Kagawa, 7600066 (JP); ISOZAKI, Masami, kamatsu-shi, Kagawa, 7600066 (JP)
(74) Representative: Luderschmidt, Schüler & Partner
(86) International application number: PCT/JP2006/303606
(87) International publication number: WO 2006/098139

(57) **Abstract**

[Problem] To provide an illuminating device and a plant growth apparatus equipped with the illuminating device which can ensure high quality plant growth while maintaining the initial costs and running costs at low levels in the growth of the plants.

[Means for Solution] An illumination device including a light source 45, a reflection plate 41 for reflecting the light irradiated from the light source 45, and a transmissive and diffusive material member 42 for transmitting and diffusing the light from the light source 45 and the reflected light from the reflection plate 41, so that the light transmitted and diffused in the transmissive and diffusive material member 42 is used as an illumination light. With such a construction, since the illuminating device adopts an indirect illuminating system, the entire area to be illuminated can be illuminated as uniformly as possible and high efficiency illumination almost free of luminance spots is realized. When the illuminating device is applied to a plant growth apparatus, uniformity of the degree of plant growth can be enhanced and the yield of the grown plant products is improved. In addition, a space for planting can be utilized to the maximum so that the number of grown plant significantly increases as compared with the conventional direct illumination system. By using the illumination device which causes almost no luminance spots and in which the heat generated from the light sources 45 is removed, the number of the light sources 45 installed can be reduced and, therefore, consumption of electric power for the illumination devices and air conditioning can be reduced.

## Description

### [Technical Field]

The present invention relates to an illuminating device suited for use in the growth of plants and to a plant growth apparatus using the illuminating device.

As used herein the term "plant growth" is intended to include production of seedlings, namely culture of plug seedlings, grafted nursery plants and rooted cuttings in seedling growth trays and culture of clone seedlings in culture vessels, and product production, namely culture of product plants such as spinach and lettuce. The term "plant growth apparatus" is intended to include apparatuses for producing seedlings and apparatuses for producing plant products.

### [Background Art]

In recent years, a plant growth apparatus 100 as shown in FIG. 11 has been increasingly used for the growth of plants (see Patent Document 1). This apparatus comprises a growth rack 102 having a plurality of vertically stacked shelves 101, a plant growing box 103 placed on each of the shelves 101, and an illuminating device 104 provided in each of the shelves 101 for illuminating plants planted in each of the plant growing boxes 103 (direct illumination system). Here, the term "plant growing box" is intended to include a seedling growing tray, a seedling culture container and a culture vessel for use in production of plant products.

In this case, the illuminating device 104 generally has a construction in which a plurality of straight fluorescent lamps 105 are mounted to an upper part of each of the shelves 101 (see Patent Document 1).

In such an illuminating device 104 of a direct irradiation system using straight fluorescent lamps 105, it is also the general practice to use a reflecting shade 106 for the purpose of making the luminance uniform (see Patent Document 2).

In the conventional plant growth apparatus 100, the growth rack 102 is generally confined in an air-conditioned closed space 107 for the purpose of growing the plants in an optimum growth environment (see Patent Document 1).

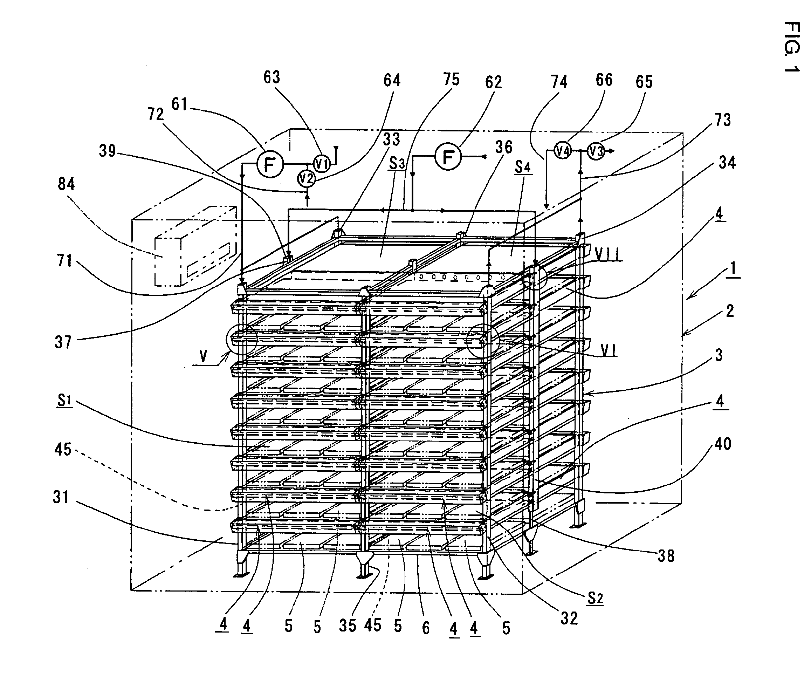

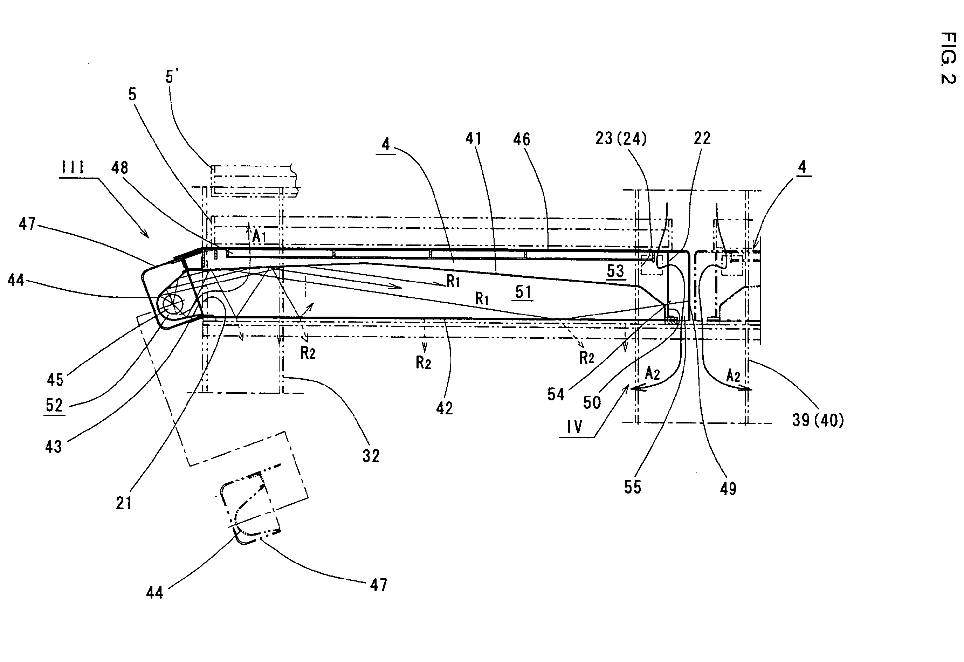

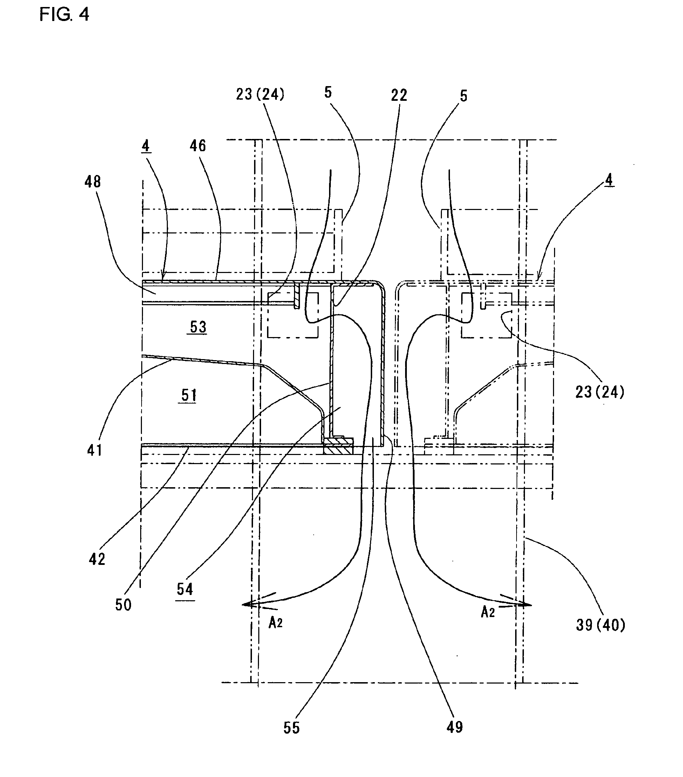

[Patent Document 1] Japanese Unexamined Patent Application Publication No. 2001-346450 (paragraphs [0019], [0020], [0037] and [0040] to [0043], and FIGS. 1 and 4)
[Patent Document 2] Japanese Unexamined Patent Application No. S60-225302 (page 2, upper right column, line 16 to lower right column, line 18, and FIGS. 2, 3 and 4)

### [Disclosure of the Invention]

### [Problems to be Solved by the Invention]

The conventional plant growth apparatus 100 as shown in FIG. 11 or in Patent Document 1 in which the illuminating device 104 including a plurality of straight fluorescent lamps 105 is used for illuminating plants 108 planted in each plant growing box 103 has the following problems.

Namely, when the illuminating device 104 of a direct illumination system is placed close to the plants 108 for performing a short distance illumination, there is a fear that the plants 108 are susceptible to leaf burn due to the heat generated and radiated from the fluorescent lamps 105. There is also a fear that heat is accumulated in the culture vessels for growing clone seedlings, etc. thereby to increase the temperature in the vessels and to cause death of the plants. For these reasons, a long distance illumination method in which the fluorescent lamps 105 are spaced a long distance from the plants 108 should be unavoidably adopted in sacrifice of the illumination efficiency. In order to ensure optimum luminance for the growth of the plants 108, it is necessary to increase the number of the fluorescent lamps 105. Thus, the conventional technique has the following problems:
(1) Use of a large number of the fluorescent lamps 105 requires a large consumption of electric power for the illumination and causes an increase of the running cost of the plant growth apparatus 100.
(2) When the number of fluorescent lamps 105 used is large, the ambient temperature of the plants 108 increases due to the heat generated from the illumination device 104, so that there is a fear that the growth of the plants 108 is adversely affected. In order to avoid such a fear, air conditioning of the closed space 107 must be conducted aggressively with an increased cost. This causes an increase of the running cost of the plant growth apparatus 100.
(3) The heat generated from the fluorescent lamps 104 causes a large temperature difference between upper and lower portions in the plant growth apparatus 100. As a result, a difference is created in the degree of growth between the plants 108 in the plant growing boxes 103 located in a high temperature upper side and the plants 108 in the plant growing boxes 103 located in a low temperature lower side. Thus, not only the uniformity of the plant growth but also the quality and yield of the grown plants are reduced.
(4) The illumination with straight fluorescent lamps 104 is so called a linear illumination system which is apt to cause luminance stripes or spots. Thus, among the plants 108 planted in the same plant growing box 103, the degree of growth varies with the planted positions. There is therefore a fear that not only the uniformity of the plant growth but also the quality and yield of the grown plants are reduced. To cope with this fear, a reflecting shade 106 is used. However, there is a limitation to such use of the reflecting shade. Satisfactory results are not obtainable.
(5) From the viewpoint of generation and radiation of heat and uniformity of the illumination, it is inevitable to adopt a long distance illumination and to provide a large vertical distance between the adjacent shelves 101. Therefore, the number of the stacked shelves 101 provided in a predetermined height must be reduced. As a result, the effective space utilization is reduced. Further, the initial cost and running cost of the plant growth apparatus 100 increase. At the same time, the productivity of the plant growth apparatus 100 is reduced.

It is, therefore, a prime object of the present invention to provide an illuminating device and a plant growth apparatus equipped with the illuminating device which can ensure high production efficiency and high quality plant growth while maintaining the initial costs and running costs at low levels in the growth of the plants.

### [Means for Solving the Problems]

As specific means for solving the foregoing problems, the present invention uses the following constitution.

A first aspect of the present invention is characterized by comprising a light source 45 for irradiating a light in a specific direction, a reflection plate 41 disposed in a front side of an irradiating direction of said light source 45 for reflecting the light irradiated from said light source, and a transmissive and diffusive material member 42 disposed to face said reflection plate 41 for transmitting and diffusing the light from said light source 45 and the reflected light from said reflection plate 41, so that the light transmitted and diffused in said transmissive and diffusive material member 42 can be used as an illumination light.

A second aspect of the present invention is characterized in that, in the first aspect of the present invention, said light source 45 is a light source having directivity and is configured so that the irradiating direction thereof conforms to said specific direction.

A third aspect of the present invention is characterized in that, in the first aspect of the present invention, said light source 45 is a light source having no directivity and is associated with a reflecting shade 44 so that the light irradiated from said light source is reflected by said reflecting shade in a direction conforming to said specific direction.

A fourth aspect of the present invention is characterized in that, in the third aspect of the present invention, said light source 45 is a straight fluorescent lamp.

A fifth aspect of the present invention is characterized in that, in the first, second, third and fourth aspects of the present invention, said light source 45 is isolated by a transparent partition member 43 from said reflection plate 41 and from said transmissive and diffusive material member 42 and wherein a cooling wind passage 52 is defined on that side of said partition member 43 nearer to said light source 45.

A sixth aspect of the present invention is characterized by comprising a growth rack 3 which comprises a plurality of vertically stacked shelf members, each of said shelf members including an illuminating device 4 according to any one of claims 1 to 5, wherein said illuminating device 4 is configured such that a plant growing box 5 can be placed on an upper surface thereof. The term "plant growing box" is intended to include a seedling growing tray, a seedling culture container, a hydroponic vessel for use in production of plant products.

A seventh aspect of the present invention is characterized in that, in the sixth aspect of the present invention, air is blown from an illuminating device 4 side toward the plant growing box 5 located therebelow.

An eighth aspect of the present invention is characterized in that, in the sixth aspect of the present invention, a distance between each of said illuminating devices 4 and the plant growing box 5 located therebelow is made adjustable.

A ninth aspect of the present invention is characterized in that, in the sixth, seventh and eighth aspects of the present invention, said growth rack 3 provided with said illuminating devices 4 is confined in a growth housing 2 defining therein an air-conditioned closed space.

A tenth aspect of the present invention is characterized in that, in the ninth aspect of the present invention, air outside said growth housing 2 is introduced into said cooling wind passage 52 of each of said illuminating devices 4 and air within said cooling wind passage 52 is discharged outside said growth housing 2.

An eleventh aspect of the present invention is characterized in that, in the tenth aspect of the present invention, air within said growth housing 2 is introduced into said cooling wind passage 52 of each of said illuminating devices 4 and air within said cooling wind passage 52 is discharged outside said growth housing 2.

A twelfth aspect of the present invention is characterized in that, in the eleventh aspect of the present invention, selective introduction of air outside said housing and air inside said housing into said cooling wind passage 52 of each of said illuminating device 4 and selective discharge of air within the cooling wind passage 52 to outside and inside said housing are controlled based on the temperature outside said housing, the temperature inside said housing and the temperature of the air discharged from said cooling wind passage.

### [Effect of the Invention]

The present invention gives the following effects.

(a) The illuminating device according to the first aspect of the present invention comprises a light source 45 for irradiating a light in a specific direction, a reflection plate 41 disposed in a front side of an irradiating direction of the light source 45 for reflecting the light irradiated from the light source, and a transmissive and diffusive material member 42 disposed to face the reflection plate 41 for transmitting and diffusing the light from the light source 45 and the reflected light from the reflection plate 41, so that the light transmitted and diffused in the transmissive and diffusive material member 42 can be used as an illumination light.

Therefore, since the illuminating device according to the first aspect of the present invention is a so called indirect illuminating system in which the light irradiated from the light source 45 and the light reflected from the reflection plate 41 are transmitted and diffused in the transmissive and diffusive material member 42 and in which the light thus transmitted and diffused is used as an illumination light, the entire area to be illuminated can be illuminated as uniformly as possible. Such an indirect illuminating system is almost free of luminance spots which would be generated with, for example, a direct illuminating system and is able to improve uniformity of luminance. Therefore, when the illuminating device is used as an illuminating means for a plant growth apparatus, it is no longer necessary to adopt long distance illumination; namely the illuminating device allows for short distance illumination. As a consequence, uniformity of the degree of plant growth can be enhanced so that the quality and yield of the grown plant products are improved, thereby permitting a reduction of plant growth costs.

Additionally, the indirect illumination system permits most of the light from the light source 45 to irradiate on the plants. Thus, as compared with, for example, a direct illumination system in which a greater part of the light from the light source is scattered in directions other than the direction toward the target plants, the irradiation efficiency is high. Therefore, the number of the light sources 45 can be reduced so that the consumption of electric power for the illumination device can be suppressed in correspondence to the reduced number of the light sources 45, permitting a reduction of the running costs for the illuminating device.

(b) In addition to the effects described in item (a) above, the second aspect of the present invention gives the following peculiar effect. That is, since the light source 45 of the illuminating device according to the first aspect of the present invention is specified in the second aspect of the present invention as a light source having directivity and since the irradiating direction thereof is so set as to conform to the specific direction, it is not necessary to provide means for changing the irradiation direction thereof. This can simplify the structure of the illuminating device, so that the initial cost for the illuminating device can be reduced.

(c) In addition to the effects described in item (a) above, the third aspect of the present invention gives the following peculiar effect. That is, the light source 45 of the illuminating device according to the first aspect of the present invention is specified in the third aspect of the present invention as a light source having no directivity and is associated with a reflecting shade 44 so that the light irradiated from the light source is reflected by the reflecting shade in a direction conforming to the specific direction. By combining the light source 45 which is cheap itself with the reflecting shade 44 which is also cheap itself, it is possible to irradiate the light from the light source 45 toward a specific direction. Thus, as compared with a case in which a light source having directivity is used, for example, it is possible to reduce the cost of the illuminating device.

In addition to the effects described in item (c) above, the fourth aspect of the present invention gives the following peculiar effect. That is, since the light source 45 of the illuminating device according to the third aspect of the present invention is specified in the fourth aspect of the present invention as a straight fluorescent lamp, a larger illumination area can be ensured and directivity of the irradiation light can be more easily ensured in comparison with, for example, a case where a round shaped fluorescent lamp is used. Therefore, it is possible to further reduce the cost of the illuminating device.

In addition to the effects described in item (a), (b), (c) or (d) above, the fifth aspect of the present invention gives the following peculiar effect. That is, since the light source 45 of the illuminating device according to the first, second, third and fourth aspects of the present invention is specified in the fifth aspect of the present invention as being isolated by a transparent partition member 43 from the reflection plate 41 and from the transmissive and diffusive material member 42 and since a cooling wind passage 52 is defined on that side of the partition member 43 nearer to the light source 45, the heat generated in the light source 45 is removed by a cooling wind flowing through the cooling wind passage 52 and is prevented from transmitting to the transmissive and diffusive material member 42 side.

Further, since the light source 45 is located within the cooling wind passage 52, it is possible to cool the vicinity of the light source 45 with the cooling wind and to maintain its temperature at such a temperature that the irradiation efficiency of the light source 45 becomes highest. Therefore, the highest illumination efficiency can be obtained with a lower electric power consumption so that the running cost for the illuminating device can be reduced.

The plant growth apparatus according to the sixth aspect of the present invention comprises a growth rack 3 which comprises a plurality of vertically stacked shelf members, with each of the shelf members including an illuminating device 4 according to any one of the first to fifth aspect of the present invention, wherein the illuminating device 4 is configured such that a plant growing box 5 can be placed on an upper surface thereof.

As a consequence of the above construction, the plant growth apparatus of the present invention gives the following effects.

(f-1) With the plant growth apparatus in which the illuminating device according to the first aspect of the present invention is used, the entire area to be illuminated can be illuminated as uniformly as possible with almost free of luminance spots while ensuring uniform luminance, because the illuminating device is an indirect illumination system. Therefore, illumination using the illuminating device can improve uniformity of the degree of plant growth so that the quality and yield of the grown plant products are improved. The plant growth apparatus permits a reduction of plant growth costs.

Additionally, the illumination by using the illuminating device is an indirect illumination mode, most of the light from the light source 45 can irradiate on the plants. Thus, as compared with, for example, a direct illumination system in which a greater part of the light from the light source is scattered in directions other than the direction toward the target plants, the irradiation efficiency is high. Therefore, the number of the light sources 45 can be reduced so that the consumption of electric power for the illumination device can be suppressed, permitting a reduction of the running costs for the plant growth apparatus.

(f-2) With the plant growth apparatus in which the illuminating device according to the second aspect of the present invention is used, since the light source 45 of the illuminating device is a light source having directivity, such as a light emitting diode or a laser beam source and since the irradiating direction thereof is so set as to conform to the specific direction, it is not necessary to provide means for changing the irradiation direction thereof. This can simplify the structure of the illuminating device and of the plant growth apparatus, so that the d the initial cost for the plant growth apparatus can be reduced.

(f-3) With the plant growth apparatus in which the illuminating device according to the third aspect of the present invention is used, the light source 45 of the illuminating device is a light source having no directivity and is associated with a reflecting shade 44 so that the light irradiated from the light source is reflected by the reflecting shade in a direction conforming to the specific direction. By combining the light source 45 which is cheap itself with the reflecting shade 44 which is also cheap itself, it is possible to irradiate the light from the light source 45 toward a specific direction. Thus, as compared with a case in which a light source having directivity is used, for example, it is possible to reduce the cost of the illuminating device. This means that the initial cost for the plant growth apparatus can be reduced.

(f-4) With the plant growth apparatus in which the illuminating device according to the fourth aspect of the present invention is used, since the light source 45 is specified a straight fluorescent lamp, a larger illumination area can be ensured and directivity of the irradiation light can be more easily ensured in comparison with, for example, a case where a round shaped fluorescent lamp is used. Therefore, it is possible to further reduce the cost of the illuminating device. This means that the initial cost for the plant growth apparatus can be reduced.

(f-5) With the plant growth apparatus in which the illuminating device according to the fifth aspect of the present invention is used, since the light source 45 of the illuminating device is isolated by a transparent partition member 43 from the reflection plate 41 and from the transmissive and diffusive material member 42 and since a cooling wind passage 52 is defined on that side of the partition member 43 nearer to the light source 45, the heat generated in the light source 45 is removed by a cooling wind flowing through the cooling wind passage 52 and is prevented from transmitting to the transmissive and diffusive material member 42 side. Therefore, the illuminating device does not generate or emit heat so that leaf burn of plants planted in the plant growing box 5, such as plug seedlings, grafted nursery plants and rooted cuttings in a seedling growth tray, and clone seedlings and plant products such as spinach and lettuce in a culture vessel, is prevented. There is also no fear of accumulation of heat in the culture vessel used for, for example, growth of clone seedlings and of the resulting death of clone seedlings or the like plants in the vessel.

Thus, since the illuminating device allows a short distance illumination, the distance between adjacent shelf members can be set small. As a consequence, when the height of the growth rack 3 is constant, the number of the shelf members of the growth rack 3 can be increased. Namely, a number of the plant growing boxes 5 can be disposed in the growth rack 3 so that the plant growth apparatus has a high plant production efficiency. At the same time, since the utilization efficiency of the space within the plant growth apparatus is high, the initial cost for the plant growth apparatus can be reduced.

Further, since the light source 45 of the illuminating device is located within the cooling wind passage 52, it is possible to cool the light source 45 with the cooling wind and to maintain its temperature at such a temperature that the irradiation efficiency of the light source 45 becomes highest. Therefore, the high illumination efficiency can be obtained with a lower electric power consumption so that the running cost for the plant growth apparatus can be reduced.

(g) In addition to the effects described in item (f) above, the seventh aspect of the present invention gives the following peculiar effect. That is, since the plant growth apparatus according to the seventh aspect of the present invention is configured such that, in the plant growth apparatus of the sixth aspect, air is blown from an illuminating device 4 side toward the plant growing box 5 located therebelow, the ambient temperature of the plant growing box 5 located in each of the shelf members is made uniform by the blown air flow. Therefore, the degree of growth of the plants in the plant growing box 5 is made uniform so that the yield of the grown plant products is improved. The plant growth apparatus permits an improvement of the production efficiency.

Further, when carbon dioxide gas for photosynthesis is mixed into the blowing air, the frequency of contact of the plants planted in each of the plant growing boxes 5 with the carbon dioxide gas is made as uniform as possible. Such an effect is also obtained in the case of photoautotrophically growing clone seedlings in a culture vessel. Thus, the growth of the plant is promoted and the degree of the growth is made uniform. Thus, the plant growth apparatus permits an improvement of the production efficiency.

(h) In addition to the effects described in item (f) above, the eighth aspect of the present invention gives the following peculiar effect. That is, since the plant growth apparatus according to the eighth aspect of the present invention is configured such that, in the plant growth apparatus of the sixth aspect, a distance between each of the illuminating devices 4 and the plant growing box 5 located therebelow is made adjustable, the distance can be controlled according to the growth stages of the plant. Therefore, the optimum illumination efficiency is obtainable in any of the growing stages so that the growth of the plant can be promoted. Thus, the plant growth apparatus permits an improvement of the production efficiency.

(i) In addition to the effects described in item (f), (g) or (h) above, the ninth aspect of the present invention gives the following peculiar effect. That is, since the plant growth apparatus according to the ninth aspect of the present invention is configured such that, in the plant growth apparatus of the sixth, seventh or eighth aspect, the growth rack 3 provided with the illuminating devices 4 is confined in a growth housing 2 defining therein an air- conditioned closed space, it is possible to easily realize the optimum space atmosphere for the growth of the plant by the air-conditioning of the inside of the growth housing 2. As a consequence, the growth of the plant can be promoted so that the plant growth apparatus has an improved production efficiency.

(j) In addition to the effects described in item (i) above, the tenth aspect of the present invention gives the following peculiar effect. That is, since the plant growth apparatus according to the tenth aspect of the present invention is configured such that, in the plant growth apparatus of the ninth aspect, air outside the growth housing 2 is introduced into the cooling wind passage 52 of each of the illuminating devices 4 and air within the cooling wind passage 52 is discharged outside the growth housing 2, it is possible to maintain the temperature around the light source 45 at such a temperature that the irradiation efficiency of the light source 45 becomes highest by controlling the introduction of air outside the housing into the cooling wind passage 52 as well as the discharge of the air within the cooling wind passage 52 to the outside of the housing. Therefore, the illumination efficiency of the illuminating device is improved. Moreover, the running cost of the plant growth apparatus is reduced, while improving the production efficiency thereof.

Further, the high temperature air within the cooling wind passage 52 is discharged to the outside of the growth housing 2 and is not circulated into the inside of the housing. Therefore, when the inside of the housing is cooled by an air conditioning cooler, the consumption of the electric power thereof is reduced as compared with the case where the air is circulated into the inside of the housing so that the running cost of the plant growth apparatus is reduced.

(k) Since the plant growth apparatus according to the eleventh aspect of the present invention is configured such that, in the tenth aspect, air within the growth housing 2 can be introduced into the cooling wind passage 52 of each of the illuminating devices 4 and air within the cooling wind passage 52 can be discharged outside the growth housing 2, the air within the cooling wind passage 52, the temperature of which is increased by the heat generation of the light source 45, is discharged to the inside of the housing (namely, introduced into the inside of the housing) and is utilized for warming the inside of the housing. Therefore, the consumption of the electric power in the air conditioner for air conditioning the inside of the housing is reduced in such an amount as to correspond to the warming load of the discharged air. Thus, the running cost of the plant growth apparatus is reduced.

(1) Since the plant growth apparatus according to the twelfth aspect of the present invention is configured such that, in the eleventh aspect, selective introduction of air outside the housing and air inside the housing into the cooling wind passage 52 of each of the illuminating device 4 and selective discharge of air within the cooling wind passage 52 to outside and inside the housing are controlled based on the temperature outside the housing, the temperature inside the housing and the temperature of the air discharged from the cooling wind passage, control of the illumination efficiency of the illuminating device (namely, the illumination efficiency by the temperature control of the light source) and control of the air conditioning of the inside of the housing can be made in association with each other. Thus, the temperature control can be efficiently done so that a reduction of the running cost and an improvement of the productivity of the plant growth apparatus can be attained.

### [Best Mode for Carrying out the Invention]

The preferred embodiments of the present invention will be concretely described below.

### A: First Embodiment:

FIG. 1 depicts a plant growth apparatus 1 according to a first embodiment of the present invention. In the plant growth apparatus 1 a predetermined number of illuminating devices 4 according to the present invention are mounted in a growth rack 3 which will be described below. The growth rack 3 is disposed in a closed space defined in a growth housing 2.

### Structure of growth rack 3:

The growth rack 3 comprises four supporting column 31 to 34 which stand at four corners of a rectangular area and which are integrally assembled into a cubic frame. In one side of the cubic frame, a fifth supporting column 35 is disposed at a center between the first and second supporting columns 31 and 32, while a sixth supporting column 36 is disposed at a center between the third and fourth supporting columns 33 and 34 in the opposite side. Further, a seventh supporting column 37 is disposed between the first supporting column 31 located in the one side and the third supporting column 33 located in the other side, while an eighth supporting column 38 is disposed between the second supporting column 32 located in the one side and the fourth supporting column 34 located in the other side.

A rectangular box-like space of in the growth rack 3 is hypothetically divided into four spaces surrounded by the supporting column 31 to 38. Namely, first and second spaces S1 and S2 are formed left and right sides of the fifth supporting column 35, respectively, in the front side of a line connecting the seventh and eighth supporting columns 37 and 38, while third and fourth spaces S3 and S4 are formed left and right sides of the sixth supporting column 36, respectively, in the back side of a line connecting the seventh and eighth supporting columns 37 and 38.

Eight shelves may be provided in each of the spaces S1 to S4 of the growth rack 3 with each shelf being capable of supporting a plant growing box 5 thereon. In the illustrated embodiment, however, a shelf plate 6 is provided in only the bottom of each of the spaces S1 to S4. In the other shelf disposing locations, hereinafter described illuminating devices 4 are disposed. In this case, an upper side of each illuminating device 4 is configured to be used as a shelf plate (though the upper surface of the illuminating devices 4 located at the top are not used as shelves).

In the growth rack 3, the first to fourth supporting columns 31 to 34 located at the four corners are configured to function as air ducts as described hereinafter. Additionally, the seventh and eighth supporting columns 37 and 38 located in the center of the left and right sides of the growth rack 3 are provided with ducts 39 and 40, respectively, as described hereinafter.

### Structure of illuminating device 4:

As shown in FIGS. 2 to 4, the illuminating device 4 is a flat body having a rectangular plan shape in correspondence to the plan shape of the spaces S1 to S4 of the growth rack 3 and is provided with a fluorescent lamp 45, a reflection plate 41 and a transmissive and diffusive material member 42 as described below.

The fluorescent lamp 45 (which corresponds to "light source" in the appended claims) is laterally fixed in front of and in parallel with a transparent partition member 43 provided in a fore part of the illuminating device 4. The reflecting shade 44 having a nearly parabolic cross-section extends in substantially parallel with the fluorescent lamp 45 and is located so that the fluorescent lamp 45 is positioned inside a deep recess portion of the reflecting shade 44. The reflecting shade 44 has an open end facing the partition member 43.

The reflecting shade 44 is accommodated in a cover member 47 having a U-shaped cross-section and integrated therewith. The integrated cover member 47 and the reflecting shade 44 are detachably secured to the transmissive and diffusive material member 42.

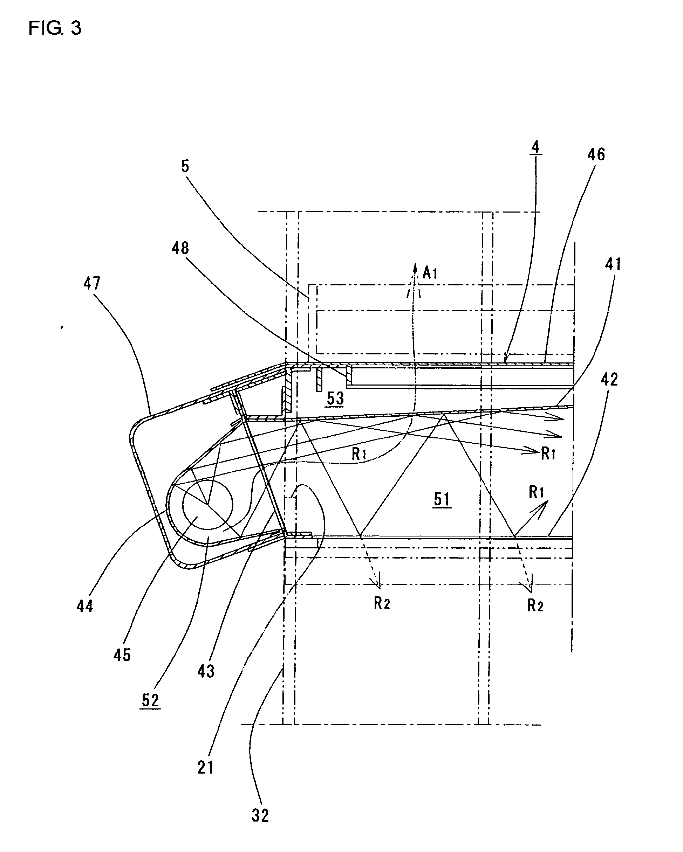

In the state where the reflecting shade 44 is positioned, together with the cover member 47, outside the fluorescent lamp 45 as shown in FIG. 3, a void space 52 is defined between the reflecting shade 44 and the partition member 43 with the fluorescent lamp 45 being located in the void space 52. The void space 52 extends along the longitudinal direction of the fluorescent lamp 45 and constitutes "cooling wind passage" as recited in the appended claims. Thus, the void space 52 is hereinafter referred to as cooling wind passage 52.

In the cooling wind passage 52 provided in the illuminating device 4, a cooling wind is forced to stream. The cooling wind passage 52 has both end portions with different structures. The positional relationship of the end portions is opposite between the cooling wind passages 52 of the illuminating devices 4 disposed in the space S1 and the cooling wind passages 52 of the illuminating devices 4 disposed in the space S2, and between the cooling wind passages 52 of the illuminating devices 4 disposed in the space S3 and the cooling wind passages 52 of the illuminating devices 4 disposed in the space S4.

Namely, as shown in FIG. 1, the right end portion of the cooling wind passage 52 of each of the illuminating devices 4 in the space S1 is so constructed as to communicate with the left end of the cooling wind passage 52 of each of the illuminating devices 4 in the space S2.

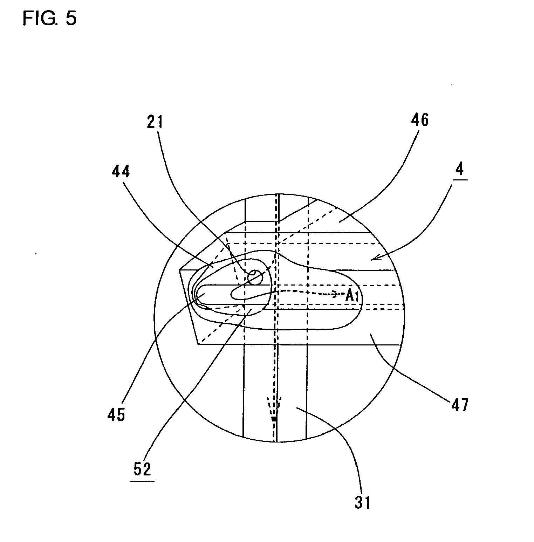

Further, as shown in FIG. 1 and FIG. 5, the left end portion of the cooling wind passage 52 of each of the illuminating devices 4 in the space S1 terminates and opens adjacent to a front face of the first supporting column 31. The front face of the first supporting column 31 is provided with apertures 21 at positions corresponding to the openings of the left end portions of the cooling wind passages 52 so that each of the cooling wind passages 52 is in fluid communication with the inside space of the first supporting column 31.

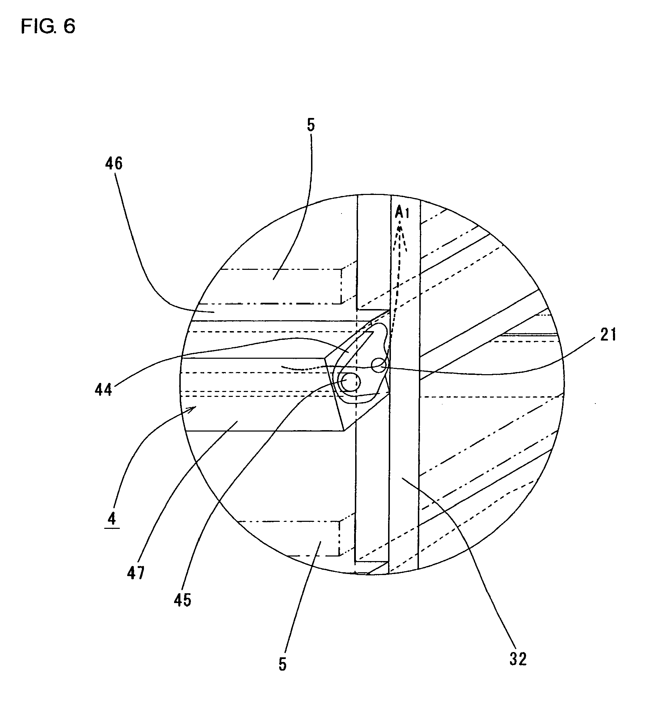

On the other hand, as shown in FIG. 1 and FIG. 6, the right end portion of the cooling wind passage 52 of each of the illuminating devices 4 in the space S2 terminates and opens adjacent to a front face of the second supporting column 32. The front face of the second supporting column 32 is provided with apertures 21 at positions corresponding to the openings of the right end portions of the cooling wind passages 52 so that each of the cooling wind passages 52 is in fluid communication with the inside space of the second supporting column 32.

The illuminating devices 4 in the space S3 and the illuminating devices 4 in the space S4 are also constructed in the same manner as above.

As a consequence of the above construction, a cooling wind A1 fed to the inside of the first supporting column 31 can flow through the apertures 21 into the cooling wind passages 52 of the illuminating devices 4 in the space S1 and then passes to the cooling wind passages 52 of the illuminating devices 4 in the space S2. Thereafter, the cooling wind A1 flows into the second supporting column 32 through the apertures 21. During the passage of the cooling wind A1 through the cooling wind passages 52, the fluorescent lamps 45 are cooled. Thus, the cooling wind A1 is heat exchanged with the ambient air of the fluorescent lamps 45 and is discharged from the cooling wind passages 52 in a heated state. The cooling wind passages 52 constitute a cooling wind circulating system as described hereinafter.

Part of the irradiating light R1 from the fluorescent lamp 45 directly passes through the partition member 43, while the other part is reflected on an inside surface of the reflecting shade 44 and then passes through the partition member 43. The light which has thus passed through the partition member 43 is irradiated forward therefrom (namely toward a reflection plate 41 described next).

The reflection plate 41 may be, for example, a thin plate such as a resin plate or a metal plate, whose surface is plated or laminated with a reflecting film having a high reflectivity. The reflection plate 41 is bent in plural sections and has one end in the front to rear direction thereof which is fixedly connected to an upper edge of the partition member 43. The other end of the reflection plate 41 is fixedly connected to a lower edge of a partitioning wall member 50 provided in a deep recessed portion of the illuminating device 4.

The transmissive and diffusive material member 42 made from, for example, a translucent or transparent film or an acrylic resin plate is disposed to face the reflection plate 41. One end of the transmissive and diffusive material member 42 is fixed to a lower edge of the partition member 43, while the other end thereof is fixed to a lower edge of the partitioning wall member 50.

Thus, in the state where the reflection plate 41 and the transmissive and diffusive material member 42 are attached to the partition member 43, there is defined a flat plenum chamber 51 between the three. The irradiating light R1 from the fluorescent lamp 45 which passes through the partition member 43 to the plenum chamber 51 is partly incident directly into the transmissive and diffusive material member 42 and transmits and diffuses therethrough. The other part of the irradiating light R1 is reflected one or more times on a reflecting surface of the reflection plate 41 and the transmissive and diffusive material member 42 and finally incident into the transmissive and diffusive material member 42 and transmits and diffuses therethrough. Thereafter, the light is irradiated downward as illumination light R2 from the transmissive and diffusive material member 42 for the intended illumination.

On the other hand, a top plate 46 is provided above the reflection plate 41 and extends in substantially parallel with the transmissive and diffusive material member 42 to form an upper space of the illuminating device 4. A flat upper plenum 53 is defined between the top plate 46, the reflection plate 41 and the partitioning wall member 50. The top plate 46 is utilizable as a shelf plate for supporting a plant growing box 5 thereon.

The above-described embodiment is constructed such that the plant growing box 5 is directly placed on the top plate 46. However, as shown by a chain line in FIG. 2 (see reference numeral 5'), the height (height from the top plate 46 of the illuminating device 4) of the plant growing box 5 can be made adjustable. Various means may be used for adjusting the height of the plant growing box 5. For example, the plant growing box 5 can be placed on a jack-type elevating device supported on the illuminating device 4. Alternatively, the illuminating device 4 may be vertically moveably mounted to the growth rack 3 so that the height can be adjusted by displacing the vertical position of illuminating device 4.

As shown in FIG. 2 and FIG. 4, a void space 54 is defined between a rear wall 49 and the opposing partitioning wall member 50 in a recess portion of the illuminating device 4. The void space 54 has a vertically elongated cross-section and extends in the lateral direction of the illuminating device 4. The void space 54 has, at its bottom, a slit-shape air outlet 55 extending in the lateral direction of the illuminating device 4 and, thus, opens downward in the lower side of the illuminating device 4 at the air outlet 55. A plurality of spaced apart apertures 22 are formed in an upper part of the partitioning wall member 50 and arranged in the lateral direction of the illuminating device 4, so that the air outlet 55 is in fluid communication with the upper plenum 53 through the apertures 22. Further, a side opening 23 is formed in a side wall of the upper plenum 53.

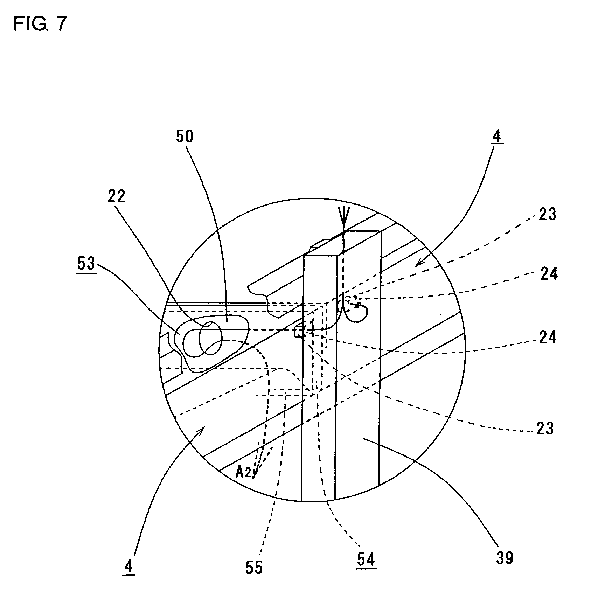

The position of the side openings 23 is opposite between the illuminating devices 4 disposed in the space S1 of the growth rack 3 and the illuminating devices 4 disposed in the space S2, and also between the illuminating devices 4 disposed in the space S3 and the illuminating devices 4 disposed in the space S4. Namely, the side openings 23 are formed on side walls of the upper plenums that face a duct 39 attached to the seventh supporting column 37 of the growth rack 3 and a duct 40 attached to the eighth supporting column 38. As shown in FIG. 7, the ducts 39 and 40 each have a pair of openings 24 and 24 at positions corresponding to the side openings 23 of the illuminating devices 4 facing thereto.

Accordingly, air A2 fed to the ducts 39 and 40 flows through the openings 24, side openings 23 of the illuminating devices 4 and the apertures 22 of the illuminating devices 4 into the void spaces 54 and is then discharged downward from the air outlets 55 of the bottom of the void spaces 54. Thus, the ducts 39 and 40 each constitute a plant growth air circulation system which will be described hereinafter.

### Mounting of illuminating devices 4 to growth rack 3:

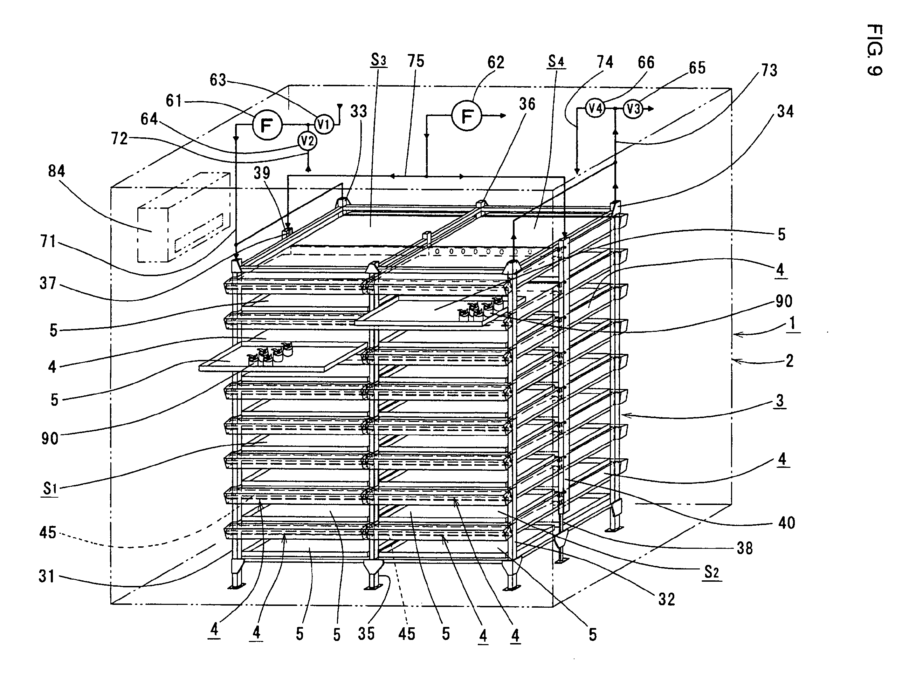

The thus constructed illuminating devices 4 are stacked in each of the spaces S1 to S4 of the growth rack 3 with a predetermined vertical space being formed between adjacent two illuminating devices 4. Since the illustrated embodiment has a construction in which the illuminating devices 4 use an indirect illumination system and in which the heat generated from the fluorescent lamps 45 is discharged, as described hereinafter, the distance between the adjacent two shelf members is reduced as compared with that of the conventional structure (see FIG. 9) so that eight-shelf structure is able to be used. Namely, as shown in FIG. 1, a shelf plate 6 is mounted in the bottom of each of the spaces S1 and S4 and eight illuminating devices 4 are arranged above each shelf plate 6 with a predetermined space.

In addition to the shelf plates 6, the top plates 46 of the illuminating devices 4 of the shelf members are utilized for supporting plant growing boxes 5 thereon. In other words, the top plates 6 which function as shelves are integrally provided in the illuminating devices 4. The illustrated embodiment is configured to support three plant growing boxes 5 on each of the shelf plates 6 and illuminating devices 4. However, it is without saying that the number of the placed plant growing boxes 5 is not specifically limited and is suitably determined depending on the kind and dimension of the plant growing boxes 5. In each of the plant growing boxes 5, a determined number of plant seedlings are planted.

Here, the description is made of the use of plant seedlings. However, it is without saying that in lieu of such seedlings, general clone seedlings cultured in a culture vessel or photoautotrophically growing clone seedlings cultured using carbon dioxide in a culture vessel can be grown with the above plant growth apparatus. Further, other than such seedlings, the plant growth apparatus can be utilized for culturing forage crops such as spinach and lettuce, for various plant factories, or for the culture of any other plants which require light for their growth.

In the state where the illuminating devices 4 are properly mounted on the growth rack 3, the cooling wind passage 52 of each of the illuminating devices 4 is selectively in fluid communication with the inside of the first, second, third or fourth supporting column 31, 32, 33 or 34, while the side opening 23 of each of the illuminating devices 4 is selectively in fluid communication with the opening 24 of the duct 38 or 40.

The plant growth apparatus 1 is constructed by disposing the growth rack 3 on which the illuminating devices 4 have been mounted within the growth housing 2. An air conditioner 84 is installed within the growth housing 2 for air-conditioning.

### Structure of air circulating system:

As described previously, the plant growth apparatus 1 of the illustrated embodiment uses supporting column 31 to 34 of the growth rack 3 as air ducts. In addition to these ducts, ducts 39 and 40 are provided to constitute the air circulation system therewith. Description will be next made of the cooling wind circulation system and growth air circulation system using these ducts.

### Explanation of cooling wind circulation system:

As shown in FIG. 1, the cooling wind circulation system includes an air feeding path 71 through which the first supporting column 31 and the third supporting column 33 are adapted to be in fluid communication with the outside of the housing, and an air discharging path 73 through which the second supporting column and the fourth supporting column are adapted to be in fluid communication with the outside of the housing. A fan 61 is provided in the air feeding path 71 for sucking air from the outside of the housing and feeding the air to the first and second supporting column 31 and 32. A first damper 63 is connected to an upstream of the fan 61. A branch path 72 is separated from a midway between the first damper 63 and the fan 61 and terminates at its open end at the inside of the housing. A second damper 64 is provided in the branch path 72.

The air discharging path 73 is provided with a third damper 65. A branch path 74 is separated from upstream of the third damper 65 and terminates at its open end at the inside of the housing. A fourth damper 66 is provided in the branch path 74.

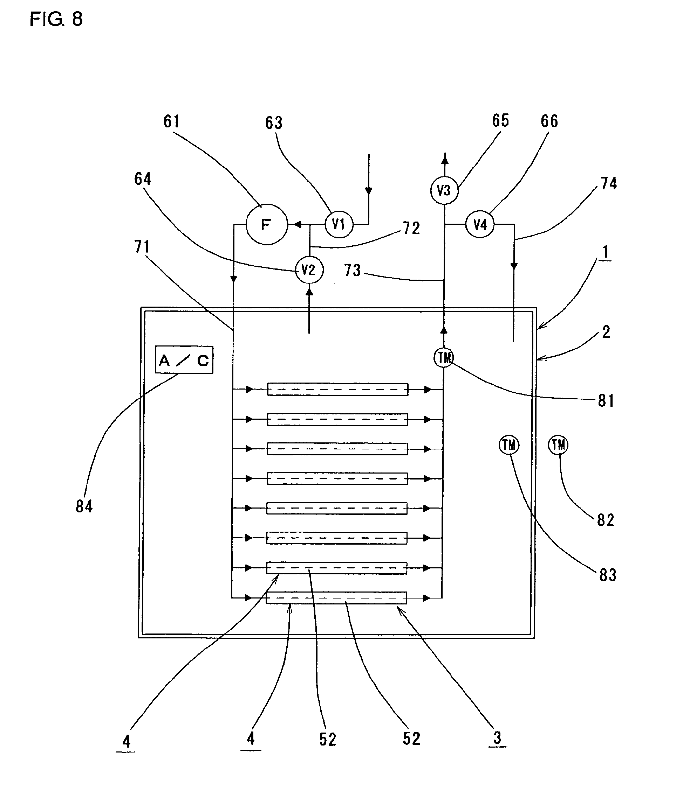

The open and closing operations of the dampers 63 to 66 and the air feed rate of the fan 61 of the cooling wind circulation system are controlled. Details of the control of the cooling wind circulation system will be next described based on a flow diagram of FIG. 8 schematically illustrating the plant growth apparatus 1.

Referring to FIG. 8, a first temperature sensor 81 is provided in the air discharging path 73 for detecting a temperature of the air discharged from the cooling wind passages 52. On the other hand, a second temperature sensor 82 is disposed outside the growth housing 2 for detecting a temperature of the air outside the housing, while a third temperature sensor 83 is disposed inside the growth housing 2 for detecting a temperature of the air inside the housing.

In performing the control, a target temperature of the inside of the housing and a target temperature of the inside of the cooling wind passages are previously set. For example, when a high frequency fluorescent lamp (Hf fluorescent lamp; total luminous flux is maximum at an ambient temperature of about 35°C) is used as the fluorescent lamp 45, the irradiation efficiency of the fluorescent lamp 45 is maximum at an ambient temperature of about 35°C. Therefore, the target temperature of the inside of the cooling wind passages is set to "35°C". An ambient temperature suited for the growth of plants is generally about 25°C. Therefore, the target temperature of the inside of the housing is set to "25°C".

Incidentally, in the case of a high frequency fluorescent lamp (Hf fluorescent lamp), the irradiation efficiency of the fluorescent lamp 45 is maximum when the ambient temperature of the fluorescent lamp 45 is about 35°C. Therefore, as the fluorescent lamp cooling air for maintaining the ambient temperature at about 35°C, the outside air at up to about 35°C can be used. Thus, in most of places in Japan, for example, such cooling can be carried out using the outside air all the year around.

The control is concretely carried out as follows.

### Control for cooling inside of the housing:

During the cooling of the inside of the housing (namely, during the cooling of the inside of the growth housing 2 with a target temperature within the housing of 25°C), provided that the temperature of air outside the housing is such as to be usable for cooling the ambient air of the fluorescent lamps 45, a control is carried out in order to ensure a high irradiation efficiency of the fluorescent lamps 45 by cooling the fluorescent lamps 45 with the air outside of the housing and to discharge the heat to the outside of the housing.

Namely, when a difference between the temperature outside the housing and the target temperature within the cooling wind passages is such that the ambient air surrounding the fluorescent lamps 45 can be cooled using the air outside the housing, for example, when the temperature outside the housing is lower than the target temperature within the cooling wind passages by 5°C or more, the fan 61 is operated while maintaining the first damper 63 and the third damper 65 in opened states and the second damper 64 and the fourth damper 66 in closed states.

Thus, the air outside the housing is introduced into the cooling wind passage 52 of each of the illuminating devices 4 to cool the periphery of the fluorescent lamp 45 with the introduced air outside the housing. In this case, the air heated by heat exchange in the cooling wind passage 52 is discharged as such to the outside of the housing. Therefore, the ambient temperature surrounding the fluorescent lamps 45 can be reduced without adversely affecting the cooling of the inside of the housing by the air conditioner 84.

In this case, since it is necessary to maintain the ambient temperature of the fluorescent lamps 45 at about the target temperature within the cooling wind passages (35°C) in order to ensure high irradiation and illumination efficiency of the fluorescent lamps 45, the feed rate of the air outside the housing is controlled by, for example, controlling the rotational speed of the fan 61.

When the cooling of the inside of the housing is carried out in a circumstance where the difference between the temperature outside the housing and the target temperature within the cooling wind passages is 5°C or less, no effects or only a small effect of cooling the ambient air around the fluorescent lamps will be obtainable by using the air outside the housing. In such a case, the fan 61 is operated while maintaining the first damper 63 and the third damper 65 in closed states and the second damper 64 and the fourth damper 66 in opened states.

Thus, the air inside the housing (namely air whose temperature has been adjusted to about 25°C) is introduced into the cooling wind passage 52 of each of the illuminating devices 4 to cool the periphery of the fluorescent lamp 45 with the introduced air inside the housing. In this case, the air heated by heat exchange in the cooling wind passage 52 is recycled again to the inside of the housing. Therefore, the ambient air surrounding the fluorescent lamps 45 can be cooled in simultaneous with the cooling of the inside of the housing by the air conditioner 84 without being adversely affected by the high temperature of the outside of the housing.

In this case, too, the feed rate of the air outside the housing is controlled by controlling the rotational speed of the fan 61, so that the ambient temperature around the fluorescent lamps 45 is maintained at about the target temperature within the cooling wind passages (35°C).

### Control for warming inside of the housing:

When warming of the inside of the housing is required, a control is carried out in order to ensure a high irradiation efficiency of the fluorescent lamps 45 while eliminating or reducing the load of warming in the air conditioner 84 by utilizing the high temperature air heated by cooling the periphery of the fluorescent lamps 5 of the illuminating device 4.

Namely, when the temperature of the air inside the housing is below the target temperature inside the housing, the fan 61 is operated while maintaining the first damper 63 and the third damper 65 in closed states and the second damper 64 and the fourth damper 66 in opened states.

Thus, the air inside the housing whose temperature is lower than the target temperature inside the housing is introduced into the cooling wind passage 52 of each of the illuminating devices 4 to cool the periphery of the fluorescent lamp 45 with the introduced air inside the housing. In this case, the air heated by heat exchange in the cooling wind passage 52 is recycled again to the inside of the housing to warm the inside of the housing. The air conditioner is operated in a warming mode only when the recycling of the heated air to inside of the housing cannot increase the temperature thereof to the target temperature.

In this case, too, the feed rate of the air outside the housing is controlled by controlling the rotational speed of the fan 61, so that the ambient temperature around the fluorescent lamps 45 is maintained at about the target temperature within the cooling wind passages (35°C).

### Explanation of the growing air circulation system:

As shown in FIG. 1, the growing air circulation system includes a pair of the ducts 39 and 40 of the growth rack 3, an air feeding path 75 through which each of the ducts 39 and 40 are in fluid communication with a source of air provided outside or inside the housing, and a fan 62 provided in the air feeding path 75. Air (in the present embodiment, mixed air containing 1,000 to 3,000 ppm of carbon dioxide is used) supplied to each of the ducts 39 and 40 from the air feeding path 75 successively passes, as shown in FIG. 2, FIG. 4 and FIG. 7, through each of the ducts 39 and 40, opening 24 formed in the ducts 39 and 40, side openings 23 formed in the illuminating devices 4, and apertures 22 formed in the illuminating devices 4 and flows into the void spaces 54. Then, the air is blown downward from the air outlets 55 provided at the bottom of the void spaces 54. Thus, the air passes over the plant growing boxes 5 placed on the top of the illuminating devices 4 positioned just below, so that the ambient temperature surrounding the plat growing boxes 5 is made uniform. Because carbon dioxide is contained in the blown air and because such air is effectively and uniformly brought into contact with the plants planted in the plant growing boxes 5, the photosynthesis of the plants are enhanced. As a result of the synergism of these effects, the growth of the plants in the plant growing boxes 5 is facilitated uniformly, so that the production efficiency of the plants is improved.

In the growing air circulation system of the illustrated embodiment, the growth rack 3 as a whole is subjected to the air circulation. In an alternate embodiment of the present invention, a compact fan is attached to the partitioning wall member 50 located in a recessed portion of each of the illuminating devices 4 so that a growing air circulation system is formed in each of the illuminating devices 4. In such a construction, since the ducts 39 and 40 and the fan 62 need not be mounted, the apparatus becomes compact.

### Embodiment of use of plant growth apparatus 1:

The air circulation system, etc. have been explained in the foregoing and description will be next made of growth of plants using the plant growth apparatus 1.

In starting the growth of plants using the plant growth apparatus 1, a predetermined number of the plant growing boxes 5 each planted with a suitable number of the plants are placed in position on shelf members of the growth rack 3. The fluorescent lamp 45 of each of the illuminating devices 4 which constitute the shelf members is put ON to illuminate the corresponding plant growing box 5 to permit the photosynthesis and growth of the plants. The fan 61 and the fan 62 are operated to cool the fluorescent lamps 45 for the purpose of improving the irradiation efficiency and enhancing the growth of the plants with the simultaneous improvement of the energy saving for the air conditioning of the inside of the housing. Further, air is blown over the plant growing boxes 5 from the illuminating devices 4 to make the ambient temperature of the plants uniform and to accelerate the growth thereof. If necessary, the inside of the growth housing 2 is cooled or warmed to maintain the temperature inside the housing at the optimum temperature for the growth of the plants. Thus, the plants can be grown with a high productivity and a low running cost because of the synergism of above effects.

The above procedures will be described concretely below.

(a) In the illustrated embodiment, the illuminating device 4 is of an indirect type illumination system which comprises the fluorescent lamp 45, the reflecting shade 44 for directing the irradiating light from the fluorescent lamp 45 to a specific direction, the reflection plate 41 for reflecting downward the light irradiated from the fluorescent lamp 45, and the transmissive and diffusive material member 42 for transmitting and diffusing the light from the fluorescent lamp 45 and the reflected light from the reflection plate 41. The fluorescent lamp 45 separated by the partition member 43 from the reflection plate 41 and the transmissive and diffusive material member 42. Further, the ambient air of the fluorescent lamp 45 is cooled with the cooling wind supplied to the cooling wind passage 52.

Part of the irradiating light R1 from the fluorescent lamp 45 directly passes through the partition member 43, while the other part is reflected on an inside surface of the reflecting shade 44 and then passes through the partition member 43. The light which has thus passed through the partition member 43 is irradiated forward therefrom toward the reflection plate 41. The irradiating light R1 irradiated on the reflection plate 41 side is partly incident directly into the transmissive and diffusive material member 42 and transmits and diffuses therethrough. The other part of the irradiating light R1 is reflected one or more times on the reflecting surface of the reflection plate 41 and the transmissive and diffusive material member 42 and finally incident into the transmissive and diffusive material member 42 and transmits and diffuses therethrough. Thereafter, the light is irradiated downward as the illumination light R2 from the transmissive and diffusive material member 42 for the intended illumination.

Accordingly, the plant growth apparatus 1 gives the following peculiar effects.

Namely, because the illuminating device 4 is an indirect illumination type apparatus, the entire area to be illuminated can be illuminated as uniformly as possible so that luminance spots which would be experienced with a direct illumination system hardly occur. Further, there is no fear of leaf burn of plants or death of clone seedlings due to heat generated or radiated from the fluorescent lamps 45. Moreover, there is no fear of a reduction of photosynthesis due to an increase of the leaf temperature or an unevenness of photosynthesis due to luminance spots. It is, therefore, possible to adopt a short distance illumination of the plants. As a synergism of the above effects, a high illumination efficiency is ensured. Use of such an illuminating device 4 in the plant growth apparatus 1, therefore, can accelerate the uniform growth of the plants, improve the yield of the grown plants, increase the number of the plants due to a reduced distance between the shelves and, hence, can reduce the cost for the growth of the plants.

Additionally, the indirect illumination system of the illuminating device 4 permits most of the light from the light source 45 to irradiate on the plants. Thus, as compared with, for example, a direct illumination system in which a greater part of the light from the light source is scattered in directions other than the direction toward the target plants, the irradiation efficiency is high. Therefore, the number of the fluorescent lamps 45 can be reduced so that the consumption of electric power for the illumination device 4 can be suppressed in correspondence to the reduced number of the fluorescent lamps 45, permitting a reduction of the running costs for the illuminating device 1.

(b) In the above embodiment, since the fluorescent lamp 45 of the illuminating device 4 is isolated by a transparent partition member 43 from the reflection plate 41 and from the transmissive and diffusive material member 42 and since a cooling wind passage 52 is defined on that side of the partition member 43 nearer to the light source 45, the heat generated in the fluorescent lamp 45 is removed by a cooling wind flowing through the cooling wind passage 52 and is prevented from transmitting to the transmissive and diffusive material member 42 side. Therefore, leaf burn of plants or death of clone seedlings planted in the plant growing boxes 5 due to heat generated from the illuminating device 4 do not occur. Further a reduction of photosynthesis due to an increase of the leaf temperature or an unevenness of photosynthesis due to luminance spots do not occur. It is, therefore, possible to adopt a short distance illumination of the plants. Thus, provided that the height of the growth rack 3 is constant, it is possible to increase the number of the shelf members installed in the growth rack 3 and, hence, to place the number of the plant growing boxes 5 thereon. Therefore, in correspondence to an increase of the number of the placed plant growing boxes 5, the plant growth apparatus 1 can give a high production efficiency. At the same time, since the utilization efficiency of the space within the plant growth apparatus 1 is high, the initial cost for the plant growth apparatus 1 can be reduced.

(c) Further, since the fluorescent lamp 45 is located within the cooling wind passage 52 of the illuminating device 4, it is possible to cool the vicinity of the fluorescent lamp 45 with the cooling wind and to maintain its temperature at such a temperature that the irradiation efficiency of the fluorescent lamp 45 becomes highest. Therefore, the highest illumination efficiency can be obtained with a lower electric power consumption so that the running cost for the plant growth apparatus 1 can be reduced.

(d) In the above embodiment, since the plant growth apparatus is configured such that air is blown from the illuminating device 4 side toward the plant growing box 5 located therebelow, the temperature in the vicinity of the plant growing box 5 located in each of the shelf members is made uniform by the blown air flow. Therefore, the degree of growth of the plants in the plant growing box 5 is made uniform so that the yield of the grown plant products are improved. The plant growth apparatus permits an improvement of the production efficiency.

Further, when carbon dioxide gas for photosynthesis is mixed into the blowing air, the frequency of contact of the plants planted in each of the plant growing boxes 5 with the carbon dioxide gas is made as uniform as possible. Thus, the growth of the plant is promoted and the degree of the growth is made uniform. Thus, the plant growth apparatus 1 permits an improvement of the production efficiency.

(e) Since the distance between each of the illuminating devices 4 and the plant growing box 5 located therebelow is made adjustable, the distance can be controlled according to the growth stages of the plant. Therefore, the optimum illumination efficiency is obtainable in any of the growing stages so that the growth of the plant can be promoted. Thus, the plant growth apparatus 1 permits an improvement of the production efficiency.

(f) Since air outside the growth housing 2 is introduced into the cooling wind passage 52 of each of the illuminating devices 4 and air within the cooling wind passage 52 is discharged outside the growth housing 2, it is possible to maintain the ambient temperature of the fluorescent lamp 45 at such a temperature that the irradiation efficiency of the fluorescent lamp 45 becomes highest by controlling the introduction of air outside the housing into the cooling wind passage 52 as well as the discharge of the air within the cooling wind passage 52 to the outside of the housing. Therefore, the illumination efficiency of the illuminating device 4 is improved. Moreover, since the consumption of the electric power is greatly reduced by cooling the heat generated from the fluorescent lamps using the outside air, the running cost of the plant growth apparatus 1 is reduced, while improving the production efficiency thereof.

Further, since air within the growth housing 2 can be introduced into the cooling wind passage 52 of each of the illuminating devices 4 and air within the cooling wind passage 52 can be discharged outside the growth housing 2, the air within the cooling wind passage 52, the temperature of which is increased by the heat generation of the fluorescent lamp 45, is discharged to the inside of the housing (namely, introduced into the inside of the housing) and is utilized for warming the inside of the housing. Therefore, the consumption of the electric power in the air conditioner for air conditioning the inside of the housing is reduced in such an amount as to correspond to the warming load of the discharged air. Thus, the running cost of the plant growth apparatus is reduced.

Furthermore, since the selective introduction of air outside the housing and air inside the housing into the cooling wind passage 52 of each of the illuminating devices 4 and selective discharge of air within the cooling wind passage 52 to outside and inside the housing are controlled based on the temperature outside the housing, the temperature inside the housing and the temperature of the air discharged from the cooling wind passage, the consumption of electric power can be significantly reduced. Thus, the running cost of the plant growth apparatus 1 is reduced while the productivity of thereof is improved.

In the above embodiment, the number of the shelves stacked in the growth rack 3 is eight. It is without saying that the present invention is not limited to such a construction only and the number can be arbitrarily changed as necessary.

In the plant growth apparatus 1 according to the above embodiment, the growth rack 3 is disposed within and is open communication with the growth housing 2. Thus, not only the growth rack 3 but also the entire space in the growth housing 2 is air conditioned. In an alternate embodiment of the present invention, the periphery of each of the shelf members of the growth rack 3 is covered with a curtain-like sheet so that only the space within the sheet for the growth of plants is air conditioned. In such a construction, consumption of the electric power for the air conditioning can be further reduced in correspondence to a reduction of the load of the air conditioning.

In the above construction in which the periphery of each of the shelf members of the growth rack 3 is covered with a curtain-like sheet, the interior surface of the sheet can be made of a highly reflective film such as an aluminum vapor deposition film. In this case, the light from the illuminating device 4 is reflected on the reflective surface toward inside of the shelf member so that almost no light escapes from the shelf member toward outside thereof. The illumination efficiency of the illuminating device 4 is thus improved and consumption of the electric power for the illumination can be further reduced.

### B: Second Embodiment:

FIG. 9 depicts a plant growth apparatus 1 according to a second embodiment of the present invention. The plant growth apparatus 1 has the same fundamental structure with that of the first embodiment and differs therefrom only in the construction of the plant growing box 5. Namely, in the plant growth apparatus 1 of the first embodiment, a top plate 46 of the illuminating device 4 is utilized as a shelf plate for supporting plant growing boxes 5 thereon. Thus, a predetermined number (three in the illustrated embodiment) of the plant growing boxes 5 in the form of relatively small but long trays are placed on the top plate 46. In the second embodiment, on the other hand, the plant growing box 5 is in the form of a tray having a dimension corresponding to the plan dimension of each of spaces S1 to S4 of a growth rack 3, as shown in FIG. 9. The plant growing box 5 is slid in and out on the top plate 46 of the illuminating device 4 in a drawer fashion. Thus, the plant growing box 5 can be pulled out forwardly and pushed in rearwardly as desired on the top plate 46. The plant growing box 5 is adapted to support thereon a predetermined number of seedling pots 90 each planted with a plant.

In an alternate embodiment, the seedling pot 90 is replaced by a culture vessel, a panel for hydroponics, etc. The plant growing box 5 can be easily pulled out and pushed in with a small operation force because of rollers (not shown) provided in the growth rack 3.

Since the plant growth apparatus 1 of the present invention adopts a short distance illumination, the distance between the adjacent illuminating devices 4 is small. Therefore, it would be difficult to check the growing conditions of the plants on the plant growing box 5 in a state where the plant growing box 5 is placed on the illuminating device 4. On the other hand, the above construction enables easy confirmation with naked eyes of the growing conditions of the plants planted in the seedling pots 90 placed on the plant growing box 5 by pulling out the plant growing box 5 forwardly from the front face of the illuminating device 4 and therefore is very convenient.

The constitution, function and effect of component parts other than the component parts described above are the same as those of the plant growth apparatus 1 of the first embodiment. Thus, those component parts in FIG. 9 are donated by the same reference numerals in correspondence to FIG. 1. The description of those components in the first embodiment also applies to the second embodiment and detailed description thereof is not repeated here.

### C: Third Embodiment:

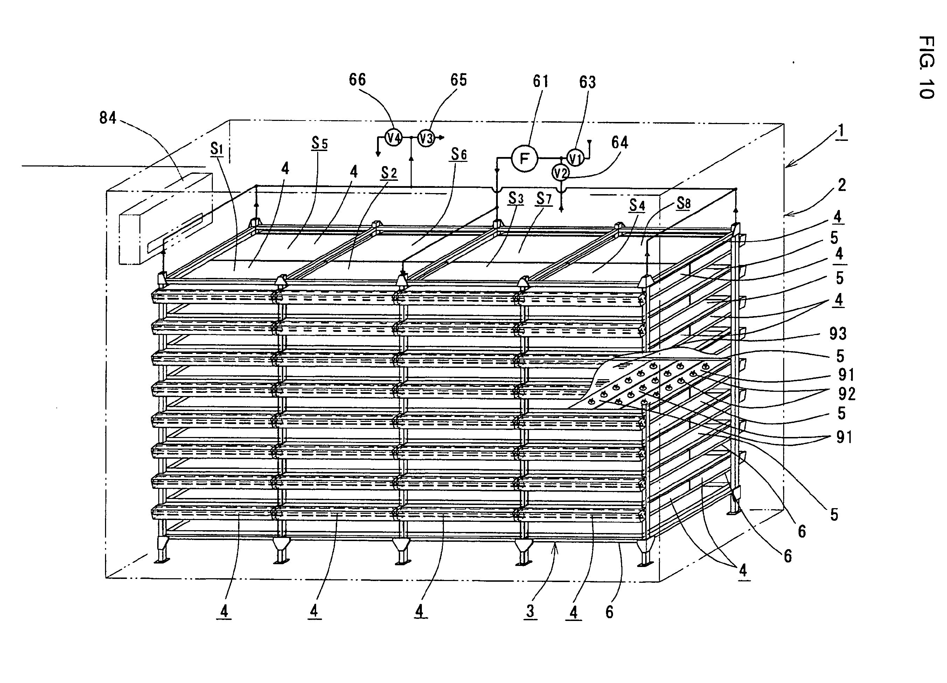

FIG. 10 depicts a plant growth apparatus 1 of a third embodiment of the present invention. The plant growth apparatus 1 is a development of the first embodiment and has a growth rack 3 provided with eight spaces including front side four spaces S1 to S4 and rear side four spaces S5 to S8. Illuminating devices 4 are stacked in each of the spaces S1 to S8.

In each of the spaces S1 to S8 of the growth rack 3, illuminating devices 4 are stacked. A plant growing box 5 in the form of a laterally elongated planer tray encompassing the entire area of the spaces S1 to S8 is fixedly or detachably supported on the illuminating devices 4. The plant growing box 5 encompassing the entire area of the growth rack 3 is illuminated with the illuminating devices 4 positioned thereabove.

The above plant growing box 5 is used as a hydroponic culture vessel and always contains a predetermined amount of a culture liquid for hydroponic plant culture. A predetermined number of hydroponic beds 91 of, for example, foamed polystyrene strips are arrayed from side to side and set float on the culture liquid in the plant growing box 5. Each of the hydroponic beds 91 is provided with planting holes 92 arranged with a suitable interval in the longitudinal direction thereof and penetrating therethrough in the thickness direction thereof. Each of the planting holes 92 is filled with a planting bed such as a sponge so that the planting bed is always impregnated with the culture liquid when the hydroponic beds 91 float on the culture liquid.

With the plant growth apparatus 1 provided with such plant growing boxes 5, the hydroponic beds 91 in which seeds have been sowed or seedlings have been planted are successively charged on the culture liquid in the plant growing box 5 at one side end in the longitudinal direction of the growth rack 3 and progressively displaced toward the other end. Thus, the planting or sowing operation can be carried out at only one side end of the growth rack 3. In a similar manner, after the growth of the plants, the hydroponic beds 91 floated on the culture liquid in the plant growing box 5 are successively pulled. Thus, the grown plants can be harvested at only one side end of the growth rack 3. Therefore, the culture operation of hydroponics becomes a light labor and can be efficiently performed.

Alternatively, the hydroponic beds 91 in which seeds have been sowed or seedlings have been planted can be intermittently charged on the culture liquid in the plant growing box 5 in correspondence to the growth stages of the plants. In this case, the hydroponic beds 91 previously charged are intermittently moved progressively toward the other end of the plant growing box 5 by charging new hydroponic beds 91. Thus, when the first charged hydroponic bed or beds 91 arrive at the other end, the plants planted therein have grown for harvest and can be collected and harvested from the hydroponic bed or beds 91 at the other side end of the growth rack 3. In this case, therefore, the hydroponic beds 91 are charged at one side end of the growth rack 3, while the grown plants are harvested at the other side end thereof. Therefore, the culture operation of hydroponics becomes a light labor and can be efficiently performed.

The constitution, function and effect of component parts other than the component parts described above are the same as those of the plant growth apparatus 1 of the first embodiment. Thus, those component parts in FIG. 10 are donated by the same reference numerals in correspondence to FIG. 1. The description of those components in the first embodiment also applies to the third embodiment and detailed description thereof is not repeated here.

### [Brief Description of the Drawings]

FIG. 1 is a perspective view showing the whole structure of a plant growth apparatus provided with illuminating devices according to a first embodiment of the present invention.
FIG. 2 is an enlarged sectional view of the illuminating device of FIG. 1.
FIG. 3 is an enlarged view of the portion indicated by III in FIG. 2.
FIG. 4 is an enlarged view of the portion indicated by IV in FIG. 2.
FIG. 5 is an enlarged view of the portion indicated by V in FIG. 1.
FIG. 6 is an enlarged view of the portion indicated by VI in FIG. 1.
FIG. 7 is an enlarged view of the portion indicated by VII in FIG. 1.
FIG. 8 is view showing a flow diagram of an air circulation system.
FIG. 9 is a perspective view showing the whole structure of a plant growth apparatus provided with illuminating devices according to a second embodiment of the present invention.
FIG. 10 is a perspective view showing the whole structure of a plant growth apparatus provided with illuminating devices according to a third embodiment of the present invention.

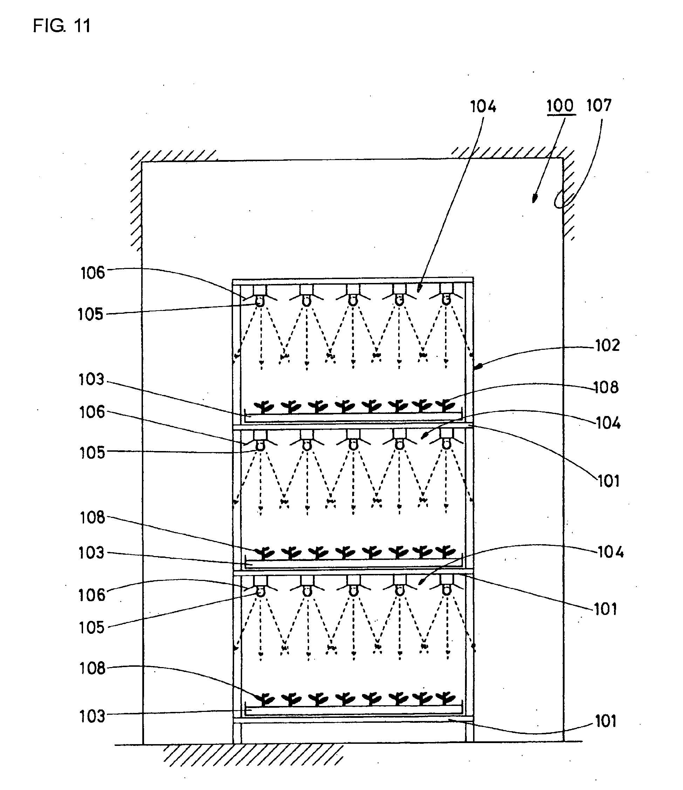

FIG. 11 is a schematic illustration of a structure of a conventional plant growth apparatus.

### [Explanation of Reference Numerals]

1: plant growth apparatus
2: growth housing
3: growth rack
4: illuminating device
5: plant growing box
6: shelf plate
21: aperture
22: aperture
23: side opening
24: opening
31: first supporting column
32: second supporting column
33: third supporting column
34: fourth supporting column
35: fifth supporting column
36: sixth supporting column
37: seventh supporting column
38: eighth supporting column
39: duct
40: duct
41: reflection plate
42: transmissive and diffusive material member
43: partition member
44: reflecting shade
45: fluorescent lamp (light source)
46: top plate
47: cover member
48: reinforcement
49: rear wall
50: partitioning wall member
51: plenum chamber
52: void space (cooling wind passage)
53: upper plenum
54: void space
55: air outlet
61: fan
62: fan
63: first damper
64: second damper
65: third damper
66: fourth damper
71: air feeding path
72: branch path
73: air discharging path
74: branch path
75: air feeding path
81: first temperature sensor
82: second temperature sensor
83: third temperature sensor
84: air conditioner
90: seedling pot
91: hydroponic bed
92: growing hole
93: culture liquid
A1: air flow
A2: air flow

## Claims

1. An illuminating device comprising a light source (45) for irradiating a light in a specific direction, a reflection plate (41) disposed in a front side of an irradiating direction of said light source (45) for reflecting the light irradiated from said light source, and a transmissive and diffusive material member (42) disposed to face said reflection plate (41) for transmitting and diffusing the light from said light source (45) and the reflected light from said reflection plate (41), so that the light transmitted and diffused in said transmissive and diffusive material member (42) can be used as an illumination light.

2. An illuminating device as recited in claim 1, wherein said light source (45) is a light source having directivity and is configured so that the irradiating direction thereof conforms to said specific direction.

3. An illuminating device as recited in claim 1, wherein said light source (45) is a light source having no directivity and is associated with a reflecting shade (44) so that the light irradiated from said light source is reflected by said reflecting shade in a direction conforming to said specific direction.

4. An illuminating device as recited in claim 3, wherein said light source (45) is a straight fluorescent lamp.

5. An illuminating device as recited in claim 3, wherein said light source (45) is isolated by a transparent partition member (43) from said reflection plate (41) and from said transmissive and diffusive material member (42) and wherein a cooling wind passage (52) is defined on that side of said partition member (43) nearer to said light source (45).

6. A plant growth apparatus comprising a growth rack (3) which comprises a plurality of vertically stacked shelf members, each of said shelf members including an illuminating device (4) according to any one of claims 1 to 5, wherein said illuminating device (4) is configured such that a plant growing box (5) can be placed on an upper surface thereof.

7. A plant growth apparatus as recited in claim 6, wherein said plant growth apparatus is configured such that air is blown from an illuminating device (4) side toward the plant growing box (5) located therebelow.

8. A plant growth apparatus as recited in claim 6, wherein a distance between each of said illuminating devices (4) and the plant growing box (5) located therebelow is made adjustable.

9. A plant growth apparatus as recited in any one of claims 6, 7 and 8, wherein said growth rack (3) provided with said illuminating devices (4) is confined in a growth housing (2) defining therein an air- conditioned closed space.

10. A plant growth apparatus as recited in claim 9, wherein said plant growth apparatus is configured such that air outside said growth housing (2) is introduced into said cooling wind passage (52) of each of said illuminating devices (4) and air within said cooling wind passage (52) is discharged outside said growth housing (2).

11. A plant growth apparatus as recited in claim 10, wherein said plant growth apparatus is configured such that air within said growth housing (2) is introduced into said cooling wind passage (52) of each of said illuminating devices (4) and air within said cooling wind passage (52) is discharged outside said growth housing (2).

12. A plant growth apparatus as recited in claim 11, wherein selective introduction of air outside said housing and air inside said housing into said cooling wind passage (52) of each of said illuminating device (4) and selective discharge of air within the cooling wind passage (52) to outside and inside said housing are controlled based on the temperature outside said housing, the temperature inside said housing and the temperature of the air discharged from said cooling wind passage.
